# FASCICULE DE BREVET EUROPEEN

(11) **EP 0 749 867 B1**
(45) Date de publication et mention de la délivrance du brevet: **13.10.1999**
(21) Numéro de dépôt: 96420206.3
(22) Date de dépôt: 20.06.1996
(51) Int. Cl.: B60N 2/44

(54) **Structure de siège de véhicule intégrant une ceinture de sécurité**
Fahrzeugsitzstruktur mit integriertem Sicherheitsgurt
Vehicle seat structure with integral safety belt

(30) Priorité: 20.06.1995 FR 9507744
(43) Date de publication de la demande: 27.12.1996
(73) Titulaire: Grupo Antolin-Ingenieria S.A., 09080 Burgos (ES)
(72) Inventeur: Chabanne, Jean-Pierre, 89710 Champvallon (FR)
(74) Mandataire: Perrier, Jean-Pierre

(56) Documents cités:
- EP-A- 0 646 493
- DE-A- 3 229 857
- DE-A- 4 330 011

## Description

L'invention est relative à une structure de siège de véhicule intégrant une ceinture de sécurité.

Elle concerne plus spécialement les sièges dans lesquels la branche thoracique de la sangle de sécurité provenant d'un enrouleur traverse un passant fixé sur l'un des montants de l'armature de dossier, alors que la branche abdominale et le pêne sont fixés sur l'armature d'assise (voir par exemple DE-A-4330011, correspondant au préambule de la revendication indépendante).

Lors d'un accident, et de manière générale, lors d'une brutale décélération, la structure de siège est soumise, par les points d'accrochage de la ceinture, à des efforts importants pouvant, par exemple, être supérieurs à 1 000 déca-newtons sur le sommet du montant de dossier portant le passant pour la branche thoracique de la sangle. En raison de la liaison entre l'armature de dossier et l'armature d'assise, ces efforts se transmettent d'abord à l'armature d'assise puis ensuite à ses points d'ancrage au plancher.

Il importe donc que cette structure soit en mesure de résister à ces efforts pour assurer la sécurité du passager. Or, malgré le soin apporté aux soudures de liaison entre les éléments de structure actuels, il n'est pas possible de garantir leur qualité et cela d'autant plus que les cadences d'une fabrication en grande série, et la recherche d'un moindre coût de fabrication, ne permettent pas de contrôler précisément chaque soudure, par exemple, par radiographie ou ultrasons.

Un autre inconvénient des structures de siège actuelles provient de leur réalisation exclusivement à partir d'éléments en acier, tels que tôles ou tubes qui, possédant des épaisseurs constantes, déterminées pour résister localement aux efforts les plus importants, sont trop résistantes et trop épaisses dans les zones moins sollicitées et, en conséquence, alourdissent inutilement la construction.

La présente invention a pour objet de remédier à ces inconvénients en fournissant une structure de siège combinant des éléments en matériaux différents, assemblés de manière fiable, et permettant d'obtenir la résistance et la réduction de poids recherchées.

A cet effet, dans la structure de siège selon l'invention, au moins le montant de l'armature de dossier solidaire du passant de sangle est constitué par un profilé extrudé en alliage métallique léger, composé d'un corps tubulaire renforcé par des caissons longitudinaux latéro-postérieurs, ce corps tubulaire recevant, dans sa zone de fixation avec une traverse et par emmanchement, un insert, avec un alésage transversal coïncidant avec des alésages transversaux ménagés dans ce montant, tandis que chacune des extrémités de la traverse, traversant l'un ou l'autre des montants et l'insert correspondant, est liée en translation à ce montant, par bouterollage de son extrémité contre la face externe du montant et par placage contre la face interne d'une nervure circulaire formée sur elle, et est liée en rotation par des déformations radiales formant crans et pénétrant dans l'insert correspondant.

Avec ce mode de construction, l'assemblage des éléments de l'armature de dossier, et en particulier des éléments supportant les plus grands efforts en cas de décélération brutale, est assuré par des moyens mécaniques conduisant à des liaisons fiables ne nécessitant qu'un contrôle géométrique des éléments, c'est à dire un contrôle s'intégrant facilement, et à moindre coût dans une fabrication en grande série.

Par ailleurs, ce mode d'assemblage permet d'unir des matériaux de natures différentes, tels qu'alliage ferreux et alliage d'aluminium, et contribue ainsi à la réduction du poids.

Enfin, le recours a un profilé extrudé renforcé pour réaliser le montant le plus sollicité, permet, par usinage, d'éliminer la matière dans les zones où elle est inutile en donnant à ce profilé une forme d'égale résistance.

Dans une forme d'exécution de l'invention, l'extrémité inférieure de chacun des montants de l'armature de dossier est fixée par une liaison mécanique, de type vis ou rivet, d'une part, sur une platine inférieure, verticale et en alliage ferreux, constituant l'élément principal de l'armature d'assise et supportant également des moyens de fixation au plancher, et, d'autre part, un carter extérieur moulé réalisé en alliage léger.

Ce montage présente l'avantage de reporter les efforts perçus par l'armature de dossier et les efforts de réaction provenant de la fixation au plancher sur des éléments en acier, donc très résistants, est d'habiller l'ensemble par un carter, moulé dans un alliage léger, avec des épaisseurs adaptées aux efforts localisés, ce carter pouvant présenter des formes, impressions ou réserves, en fonction des besoins de la présentation générale et des éléments d'identification de chaque constructeurs de véhicules.

Il apparaît qu'au gain de poids s'ajoute une réduction du coût de fabrication, par suppression des enjoliveurs en matière synthétique actuellement utilisés pour identifier chaque constructeur de véhicule.

D'autres caractéristiques et avantages ressortiront de la description qui suit en référence au dessin schématique annexé représentant, à titre d'exemple, une forme d'exécution de la structure selon l'invention dans le cas de son application à un siège à dossier fixe.
Figure 1 est une vue en coupe transversale verticale de l'armature de dossier dans sa zone de jonction avec l'armature d'assise,
Figure 2 est une vue de côté en coupe transversale suivant II-II de figure 1,
Figure 3 est une vue en coupe suivant III-III de figure 2 montrant, à échelle agrandie, la liaison entre la traverse et le montant profilé de l'armature de dossier,
Figure 4 est une vue en bout d'une forme d'exécution du profilé constituant le montant sollicité de l'armature de dossier,
Figure 5 est une vue partielle en perspective éclatée montrant les composants de l'armature d'assise.

Dans ce dessin, les références générales A et B désignent, respectivement, l'armature de dossier et l'armature d'assise. L'armature de dossier A est elle-même composée de deux montants, respectivement 2 et 3, reliés l'un à l'autre par au moins une traverse 4.

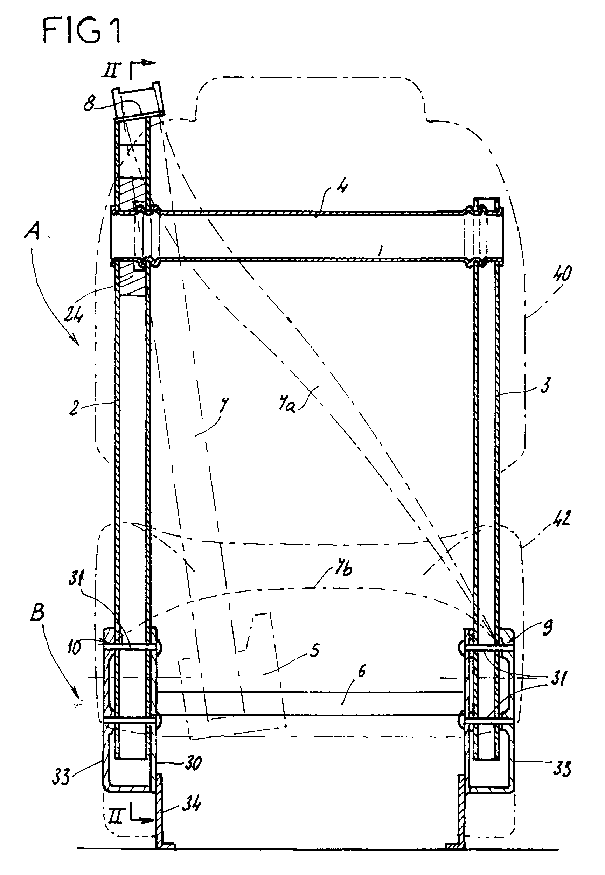

A la figure 1, la référence numérique 5 représente l'enrouleur d'une ceinture de sécurité fixé sur une entretoise 6 de l'armature d'assise B et de laquelle se dévide une sangle 7 traversant un passant 8 fixé à l'extrémité supérieure du montant 2. La branche thoracique 7a de la sangle 7 s'étend du passant 8 jusqu'au pêne 9, s'accrochant dans un boîtier, non représenté, disposé d'un côté de l'armature d'assise B. La sangle abdominale 7b s'étend de la boucle du pêne 9 jusqu'à une zone d'accrochage 10, disposée sur l'autre côté de l'armature d'assise B.

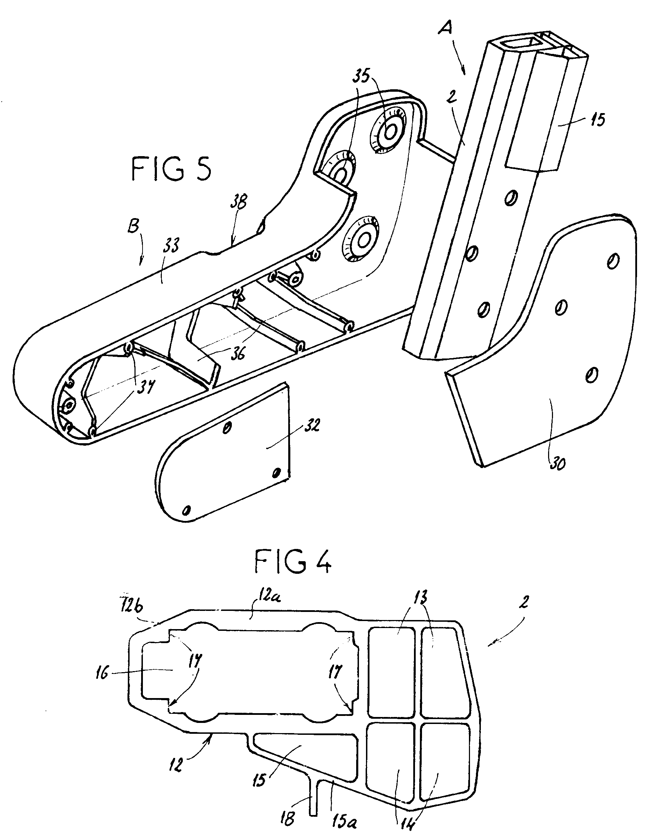

Selon l'invention, au moins le montant 2 portant le passant 8 est constitué par un profilé extrudé en alliage léger, et notamment, en alliage d'aluminium. Dans la forme d'exécution représentée à la figure 4, ce profilé est composé d'un corps principal tubulaire 12 prolongé d'un côté par deux caissons postérieurs 13, juxtaposés à des caissons 14 débordant latéralement d'un côté du corps tubulaire 12. Un caisson latéral 15 raccorde les caissons débordants 14 au flanc du corps tubulaire 12. Ce dernier présente, en section transversale, une forme extérieure rectangulaire 12a avec une extrémité antérieure trapézoïdale 12b. Intérieurement, il comporte un logement 16 de forme générale rectangulaire délimité par quatre rainures longitudinales 17 de section en "L".

Ce profilé est destiné à être disposé, avec son caisson latéral 15 et ses caissons débordants 14 tournés du côté intérieur de l'armature de dossier. On notera que la paroi 15a du caisson latéral 15 est munie d'une nervure longitudinale 18, saillant vers l'extérieur et constituant organe d'accrochage des éléments de soutien du dossier.

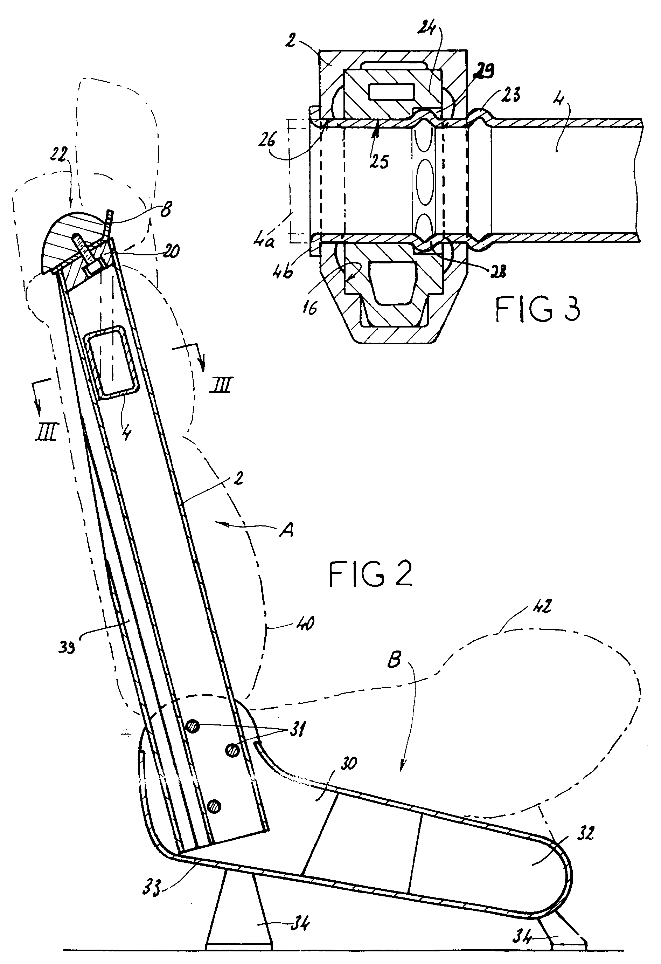

Comme montré à la figure 2, dans l'extrémité supérieure du montant 2, s'emmanche un tenon 20 solidaire d'un ensemble 22 portant le passant 8.

Le montant 3 peut être réalisé dans un profilé identique à celui du montant 2, mais il peut aussi, comme représenté ici, être réalisé dans un profilé tubulaire de section rectangulaire et en alliage ferreux, du type de ceux utilisés normalement pour constituer les armatures de dossiers.

La traverse 4 est réalisée dans un alliage ferreux et présente une section transversale qui est rectangulaire dans la forme d'exécution représentée, mais qui peut aussi être circulaire. Elle comporte à proximité de chacune de ses extrémités une nervure externe circulaire 23 destinée à participer à sa liaison en translation longitudinale avec le montant 2 ou 3 correspondant. Cette liaison met en oeuvre, comme montré aux figures 1 et 3, un insert 24, métallique ou en matière synthétique, qui est emmanché de force dans le logement 16 du profilé 2 jusqu'à ce que le logement traversant 25, qu'il comporte, coïncide avec le logement traversant 26 ménagé dans les parois latérales du profilé 2. A ce stade, la partie tubulaire de l'extrémité correspondante de la traverse 4 dépassant de la nervure 23 est engagée dans les logements 26 et 25, jusqu'à ce que ladite nervure vienne en contact avec la paroi correspondante du profilé 2. Dans une phase suivante, et comme montré à la figure 3, l'extrémité de la traverse qui dépasse du corps 2 (représentée en traits mixtes) en 4a est rabattue par bouterollage contre ladite paroi, comme représenté en 4b. Dans ces conditions, la liaison en translation longitudinale de la traverse avec le profilé 2 du montant est parfaitement assurée, dans un sens, par la partie bouterollée 4b et, dans l'autre sens, par la nervure 23. Le calage en translation et la liaison en rotation sont complétés par formation, dans la partie de la traverse disposée dans l'insert 24, de déformations radiales 28, saillant vers l'extérieur et pénétrant dans une gorge appropriée 29 de l'insert 24.

La même technique est mise en oeuvre pour assurer la liaison de l'autre extrémité de la traverse avec le montant 3.

Cette technique permet d'obtenir une liaison régulière et fiable dans le temps et limite les contrôles à de simples vérifications des dimensions et de la géométrie des éléments assemblés.

Un autre avantage de cette liaison est qu'il permet de réunir des pièces réalisées dans des matières différentes et qu'il permet ainsi d'assembler les pièces en acier avec des pièces en alliage d'aluminium et/ou de magnésium.

Dans la forme d'exécution représentée, et comme montré figure 5, l'armature d'assise est constituée, de chaque côté, par une platine principale et arrière 30, par une platine secondaire et avant 32 et par un carter 33, ces différents éléments étant reliés aux éléments disposés de l'autre côté par des traverses du type de celle représentée en 6 à la figure 1. Les platines 30 et 32 sont réalisées en alliage ferreux, par exemple, sont constituées par des tôles en acier ayant une épaisseur suffisante pour résister aux efforts statiques et dynamiques les sollicitant. Chacune de ces platines porte les éléments de fixation au plancher, représentés en 34 à la figure 1, les éléments de soutien de l'assise, et les diverses commandes d'actionnement des moyens de fixation au plancher ou d'articulation du dossier, lorsque celui-ci est articulé. La platine 30 assure en plus la liaison avec l'armature de dossier A et à ce titre, participe à la transmission des efforts perçus par cette armature de dossier à l'armature d'assise B.

Dans la forme d'exécution représentée à la figure 5, l'extrémité inférieure du montant 2 dont le caisson latéral 15 est usiné par fraisage pour réduire l'épaisseur de ce montant, est lié à la platine 30 par des vis transversales traversant la platine, cette extrémité de montant de part en part et se vissant dans des bossages 35 du carter 33. Ce carter est réalisé en alliage d'aluminium et/ou de magnésium, et par moulage, ce qui permet de moduler son épaisseur en fonction des contraintes qu'il reçoit, et de le doter localement de nervures de renfort 36 et de puits 37 pour la fixation par vis auto-taraudeuses, non représentées, de la platine 30 et de la platine 32.

De par sa forme en boîtier ouvert nervuré, chacun des carters latéraux 33 de l'armature d'assise est suffisamment résistant pour transmettre les efforts de la platine 30 à la platine 32, tout en étant plus léger qu'une structure traditionnelle en tube d'acier. Par ailleurs, il permet, en fonction des désirs des constructeurs de véhicules, de modifier l'aspect général du siège en prenant des formes différentes. Il permet aussi d'obtenir, par moulage, les logotypes d'identification des constructeurs, en évitant ainsi d'avoir recours à des plaquettes en matière synthétique collées ou clipées sur la structure de l'armature d'assise.

Chacun des carters 33 comporte, dans sa partie latérale extérieure, une dépression 38 renforcée par les nervures 36 et servant à la fixation des moyens d'accrochage de la boucle ou du boîtier pour le pêne de la sangle abdominale.

La figure 2 montre que, pour contribuer à l'allègement général du siège, sans pour autant réduire sa résistance, le montant 2 est usiné par fraisage, notamment dans sa zone 39 comportant les caissons latéraux postérieurs 13 et 14 (cf. également 2a figure 4), et cela sur plus de la moitié de sa hauteur à compter de son extrémité supérieure.

Il est évident que les deux armatures, respectivement de dossier A et d'assise B, qui viennent d'être décrites, reçoivent par la suite du montage des éléments assurant la suspension et la fixation, respectivement du garnissage de dossier 40, représenté à la figure 1, et du garnissage de l'assise 42.

Il ressort de ce qui précède que la structure de siège selon l'invention permet non seulement de supprimer les liaisons par soudure, incontrôlables économiquement dans une fabrication en série, mais aussi d'obtenir, par des techniques de fabrication et de montage, simples, fiables et facilement contrôlables, des assemblages entre matériaux différents, ce qui permet, à résistance égale, de réduire le poids général de la structure. De plus, le recours à des éléments moulés assurant l'habillage des organes mécaniques et la transmission des efforts, laisse toute liberté au créateur pour modifier les formes générales du siège, en fonction des désirs de la clientèle.

## Revendications

1. Structure de siège de véhicule intégrant une ceinture de sécurité dans laquelle la branche thoracique (7a) de la sangle de sécurité provenant d'un enrouleur (5) passe dans un passant (8) fixe sur l'un (2) des montants (2, 4) de l'armature de dossier (A), alors que la branche abdominale (7b) et le pêne sont fixés sur l'armature d'assise (B), structure dans laquelle l'armature de dossier (A) est composée de deux montants (2, 3) qui, reliés entre eux par au moins une traverse (5) sont reliés à l'armature d'assise (B) par une liaison fixe ou articulée, **caractérisée en ce que**, au moins le montant (2) de l'armature de dossier (A) solidaire du passant (8) de sangle est constitué par un profilé extrudé en alliage métallique léger, composé d'un corps tubulaire (12) renforcé par des caissons longitudinaux latéro-postérieurs (13, 14, 15), ce corps tubulaire (12) recevant, dans sa zone de fixation avec une traverse (4) et par emmanchement, un insert (24), avec un alésage transversal (25) coïncidant avec des alésages transversaux (26) ménagés dans ce montant (3), tandis que chacune des extrémités de la traverse (4), traversant l'un ou l'autre des montants (2, 3) et l'insert correspondant (24), est liée en translation à ce montant, par bouterollage (4b) de son extrémité (4a) contre la face externe du montant et par placage contre la face interne de ce montant d'une nervure circulaire (23) formée sur elle, et est liée en rotation par des déformations radiales (28), formant crans et pénétrant dans l'insert correspondant.

2. Structure de siège selon la revendication 1, **caractérisée en ce que** à partir de l'extrémité supérieure du profilé extrudé formant le montant (2) et sur plus de la moitié de la hauteur de ce montant, la largeur de ce montant va en croissant depuis une valeur correspondant à la largeur du corps tubulaire (12), jusqu'à une valeur correspondant à la largeur maximale du profilé, par fraisage des caissons latéro-postérieurs (13, 14).

3. Structure de siège selon la revendication 1, **caractérisée en ce que** l'extrémité inférieure de chacun des montants (2, 3) de l'armature de dossier (A) est fixée par une liaison mécanique, de type vis ou rivet, d'une part, sur une platine inférieure (30), verticale et en alliage ferreux constituant l'élément principal de l'armature d'assise (B) et supportant également des moyens (34) de fixation au plancher, et, d'autre part, un carter extérieur (33) réalisé par moulage d'alliage léger.

4. Structure selon la revendication 3, **caractérisée en ce que** l'extrémité antérieure de chacun des carters extérieurs (33) de l'armature d'assise (B) est fixée, par une liaison mécanique, de type vis ou rivet, sur une platine inférieure avant (32) faisant partie de l'armature d'assise (B) et supportant des moyens (34) de fixation au plancher.

## Claims

1. Vehicle seat structure with integral safety belt in which the torso branch (7a) of the safety strap coming from a retractor (5) passes through a loop (8) fixed to one (2) of the uprights (2, 4) of the backrest frame (A), while the lap branch (7b) and the latch bolt are fixed to the seat-part frame (B), in which structure the backrest frame (A) is composed of two uprights (2, 3) which, joined together by at least one crosspiece (5 [sic]), are joined to the seat-part frame (B) by a fixed or hinged connection, **characterized in that** at least the upright (2) of the backrest frame (A) secured to the strap loop (8) consists of a light metal alloy extruded section, composed of a tubular body (12) reinforced by latero-posterior longitudinal box structures (13, 14, 15), this tubular body (12) receiving, in its region for fixing to a crosspiece (4), and by force fitting, an insert (24) with a transverse bore (25) which coincides with transverse bores (26) formed in this upright (3 [sic]), whereas each of the ends of the crosspiece (4), passing through one or other of the uprights (2, 3) and the corresponding insert (24), is connected to this upright in terms of translation by its end (4a) being folded back (4b) against the outer face of the upright and by a circular ridge (23) formed on it being pressed against the inner face of this upright, and is connected in terms of rotation by radial deformations (28) forming notches and penetrating into the corresponding insert.

2. Seat structure according to Claim 1, **characterized in that,** starting from the upper end of the extruded section forming the upright (2), and over more than half of the height of this upright, the width of this upright increases from a value corresponding to the width of the tubular body (12) up to a value corresponding to the maximum width of the section, by milling the latero-posterior box structures (13, 14).

3. Seat structure according to Claim 1, **characterized in that** the lower end of each of the uprights (2, 3) of the backrest frame (A) is fixed by a mechanical connection, of the screw or rivet type, on the one hand, to a lower plate (30) which is vertical and made of ferrous alloy and constitutes the main element of the seat-part frame (B) and also supports means (34) for fixing to the floor, and, on the other hand, an outer casing (33) produced by light alloy casting.

4. Structure according to Claim 3, **characterized in that** the anterior end of each of the outer casings (33) of the seat-part frame (B) is fixed, by a mechanical connection, of the screw or rivet type, to a front lower plate (32) which forms part of the seat-part frame (B) and supports means (34) for fixing to the floor.

## Patentansprüche

1. Sitzanordnung für ein Fahrzeug, mit einem Sicherheitsgurt, bei dem das von einem Aufroller (5) kommende Brusttrum (7a) des Sicherheitsgurts ein Durchlaufelement (8) durchläuft, welches an einer (2) der Hochstreben (2, 4) des Rückenlehnenskeletts (A) befestigt ist, während das Beckentrum (7b) und das Gurtschloß an dem Sitzbereichsskelett (B) befestigt sind, wobei bei dieser Anordnung das Rückenlehnenskelett (A) aus zwei Hochstreben (2, 3) aufgebaut ist, welche miteinander durch mindestens eine Querstrebe (5) verbunden sind und durch eine feste oder gelenkige Verbindung mit dem Sitzbereichsskelett (B) verbunden sind,
**dadurch gekennzeichnet, daß** zumindest die mit dem Durchlaufelement (8) des Gurts verbundene Hochstrebe (2) des Rückenlehnenskeletts (A) von einem Extrusionsprofil aus einer Leichtmetallegierung gebildet ist, welches einen durch seitlich hintere Längskästen (13, 14, 15) verstärkten Hohlkörper (12) umfaßt, wobei dieser Hohlkörper (12) in seinem Verbindungsbereich mit einer Querstrebe (4) durch Einstecken einen Einsatz (24) mit einer Querbohrung (25) aufnimmt, welche mit Querbohrungen (26) zusammenfällt, die in dieser Hochstrebe (3) ausgebildet sind, während jedes der Enden der Querstrebe (4), das die eine oder die andere der Hochstreben (2, 3) sowie den entsprechenden Einsatz (24) durchsetzt, mit dieser Hochstrebe durch Umnieten (4b) seines Endes (4a) gegen die Außenseite der Hochstrebe und durch Anschlag einer an ihm ausgebildeten Ringrippe (23) an der Innenseite dieser Hochstrebe gegen Längsbewegung verbunden ist und durch radiale Verformungen (28), welche Kerben bilden und in den entsprechenden Einsatz eindringen, drehfest verbunden ist.

2. Sitzanordnung nach Anspruch 1, dadurch gekennzeichnet, daß ausgehend vom oberen Ende des die Hochstrebe (2) bildenden Extrusionsprofils die Breite dieser Hochstrebe über die Mitte der Höhenerstreckung dieser Hochstrebe hinaus durch Fräsbearbeitung der seitlich hinteren Kästen (13, 14) von einem der Breite des Hohlkörpers (12) entsprechenden Wert bis zu einem Wert zunimmt, welcher der Maximalbreite des Profils entspricht.

3. Sitzanordnung nach Anspruch 1, dadurch gekennzeichnet, daß das untere Ende jeder der Hochstreben (2, 3) des Rückenlehnenskeletts (A) durch eine mechanische Schraub- oder Nietverbindung zum einen an einer vertikalen unteren Platte (30) aus einer Eisenlegierung befestigt ist, welche das Grundelement des Sitzbereichsskeletts (B) bildet und außerdem Mittel (34) zur Befestigung am Fußboden trägt, und zum anderen an einem Außengehäuse (33) befestigt ist, welches durch Formen einer Leichtmetallegierung hergestellt ist.

4. Anordnung nach Anspruch 3, dadurch gekennzeichnet, daß das vordere Ende jedes der Außengehäuse (33) des Sitzbereichsskeletts (B) durch eine mechanische Schraub- oder Nietverbindung an einer vorderen unteren Platte (32) befestigt ist, welche Teil des Sitzbereichsskeletts (B) ist und Mittel (34) zur Befestigung am Fußboden trägt.
